# EUROPEAN PATENT SPECIFICATION

(11) **EP 2 819 206 B1**
(45) Date of publication and mention of the grant of the patent: **26.12.2018**
(21) Application number: 13174030.0
(22) Date of filing: 27.06.2013
(51) Int. Cl.: H01M 2/04, B29C 45/00, H01M 2/10, H01M 2/30, H01M 10/06, B29K 21/00, H01M 10/625, H01M 10/647, H01M 10/6557, H01M 10/613, H01M 10/6562, B29C 45/14, H01M 10/42

(54) **Electrical accumulator**
Elektrischer Akkumulator
Accumulateur électrique

(43) Date of publication of application: 31.12.2014
(73) Proprietor: Dometic Italy S.r.l., 47122 FORLÌ (FO) (IT)
(72) Inventor: Paci, Enrico, 47122 FORLI' (Forlì Cesena) (IT); Ambler, Micheal Reginald Charles, 47122 FORLI' (Forlì Cesena) (IT)
(74) Representative: Conti, Marco

(56) References cited:
- EP-A1- 1 717 882
- CN-Y- 2 629 231
- DE-U1-202010 017 675
- US-A1- 2002 015 880
- US-A1- 2012 074 617
- US-B1- 6 593 027

## Description

This invention relates to an electrical accumulator, commonly known as "battery", used in particular for vehicles such as camper vans, caravans or the like.

More specifically, the electrical accumulator according to this invention is of the type which can be used for supplying electricity to auxiliary systems, for example, cab lights, air conditioning system, hot plates etc. Prior art document Ep1717882 discloses a polymer battery pack comprising a bare cell, a protection circuit member electrically connected with said bare cell and resin sheath.

There are currently prior art electrical accumulators comprising a box-shaped body forming the actual energy storage unit (for example a lead-acid unit), associated with a corresponding control electronics and covered externally with a shell made from rigid plastic. More specifically, the rigid plastic shell comprises a plurality of panels or elements assembled together to cover the box-shaped body. Disadvantageously, the electrical accumulators of the above-mentioned type, e.g. those of US2012/074617A1 and DE202010017675, have a number of drawbacks. More specifically, they are very susceptible to damage (in particular to the electronic components) following impacts or vibrations, as the plastic shell is not very suitable for absorbing vibrations and impacts.

Moreover, they require suitable housings or suitable flanges for attachment during installation on the vehicle so that will remain in the correct position during driving.

Further, it has been found that these accumulators are subject to attack by adverse weather conditions or corrosive substances such as solvents or the like, as the outer shell is not sufficiently protective and has inevitable slits along the joining lines between the various parts.

For this reason, the aim of this invention is to provide an electrical accumulator that overcomes the above mentioned drawbacks of the prior art.

More specifically, the aim of this invention is to provide an electrical accumulator which has marked resistance to vibrations and impacts. Another aim of this invention is to provide an electrical accumulator which has a high flexibility of use, in particular which can be installed without the need to provide specific attachment flanges or the like.

Yet another aim of this invention is to provide an electrical accumulator which has excellent resistance to adverse weather conditions or corrosive agents.

The aim is fully achieved by the electrical accumulator according to this invention, as characterised in the appended claims. The present invention is an electrical accumulator according to claim 1 and a process according to claim 8 for making an accumulator according to claim 1. The preferred embodiments are defined in the dependent claims.

This invention also relates to a method for making the electrical accumulator.

The electrical accumulator comprises an outer cover body designed to protect and inner box-shaped body (forming an energy storage unit). According to the invention, the outer cover body is made (entirely, or substantially entirely) of an elastically deformable material, preferably rubber.

The outer cover made of rubber forms a matrix encapsulating at least a portion of the box-shaped body.

Therefore, the invention relates to an electrical accumulator for camper vans (or caravans or other similar vehicles) having a box-shaped body (for protecting the actual batteries) embedded in a elastomeric matrix (that is, a rubber matrix).

The outer cover is made by injection moulding; in particular, the outer cover is made by injection moulding by injecting rubber (or another elastomeric material) into a mould in a liquid form, for then being solidified about at least a portion of the outer surface of the box-shaped body.

Preferably, the rubber is a polyurethane mix; preferably, the rubber comprises a mix of isocyanate and polyol.

Preferably, the rubber is obtained by mixing the materials in the liquid phase, and this is followed by solidifying the liquid mix, to form a soft material.

Preferably, the rubber is soft; preferably, it is a polyurethane rubber.

More specifically, it is possible to increase the mechanical strength of the rubber by embedding inside it reinforcement elements, such as, for example, filaments or plates, made from material having a mechanical strength greater than the rubber, for example made of metal.

The cover, in a relative undeformed configuration, is shaped to match and adheres to at least a part of the outer profile of the box-shaped body.

This is achieved by moulding the cover (preferably by injection) directly around the box-shaped body.

The box-shaped body is formed by a plurality of batteries placed side by side to form a battery pack and the cover covers entirely at least the outer corners of the battery pack.

Preferably, the batteries are shaped in such a way as to form, between them, a plurality of longitudinal conduits which extend vertically for the entire height of the battery pack for forming respective paths for the passage of cooling air.

In a different embodiment, not forming part of the present invention, the box-shaped body is formed by a single battery, for example of the lead-acid type, and the cover covers entirely at least the outer corners of the battery.

Where the box-shaped body is formed by the battery pack, the cover preferably covers the battery pack already formed by the side by side positioning of the batteries.

However, in a different embodiment, the cover covers each battery of the battery pack independently from one another. Irrespective of the specific embodiment of the box-shaped body, the box-shaped body has a lower supporting surface, a lateral surface and an upper surface, and the cover comprises:
- a lower shell, forming a container, which covers entirely at least the outer corners of the lower surface and of the lateral surface of the box-shaped body, leaving at least partially free the upper surface of the box-shaped body, and
- an upper cover for closing the lower shell.

Preferably, the lower shell comprises a single block made from rubber; if necessary, provided with the above-mentioned reinforcing elements embedded in the rubber.

Preferably, the cover also comprises a single block made from rubber. The cover has at least one stretch with a linear extension having reduced thickness, preferably between 5 mm and 25 mm, positioned between two mutually adjacent portions of the cover. The stretch with reduced thickness, preferably comprising a rectilinear groove made on a surface of the cover facing towards the inside of the lower shell and therefore towards the battery pack, forms a planned line of weakness designed to constitute a line for hinging the first portion of the cover (forming a reclosable door) with respect to the second portion of the cover. Preferably, the lower shell has a bottom wall having a bottom through opening facing the above-mentioned conduits enclosed between the batteries.

In that embodiment, the bottom wall of the lower shell preferably has at least one horizontal groove extending between the bottom opening and a lateral surface of the lower shell.

The lower shell also has, on lateral surfaces facing each other, a pair of lateral handles made in one piece with the lateral surfaces, therefore also made of rubber, using the same injection process as the cover.

The method for making the accumulator according to this invention comprises a step for inserting the box-shaped (irrespective of the specific embodiment of the box-shaped body) in a mould and subsequent step of injecting rubber in the liquid state in the mould and in contact with the box-shaped body in such a way that the rubber coats at least partly the box-shaped body.

The step of injecting rubber is performed in such a way that the rubber coats at least a part of a bottom surface and an entire lateral surface of the box-shaped body, leaving at least party free an upper surface of the box-shaped body, so as to form the lower shell of the cover.

Preferably, the rubber does not cover entirely the bottom surface of the box-shaped body but leaves a part free, preferably a predominant part, for forming the above-mentioned bottom opening.

The cover is made by a further injection step different from the step for injecting the lower shell and it is achieved by preparing an auxiliary mould different from the mould used in the step of injecting the lower shell, also in this case injecting rubber in the liquid state in the auxiliary mould.

The technical features of the invention according to the above mentioned aim are clearly described in the claims below and its advantages are apparent from the detailed description which follows, with reference to the accompanying drawings, which illustrate a preferred non-limiting example embodiment of the invention and in which:
- Figure 1 shows an electrical accumulator according to this invention;

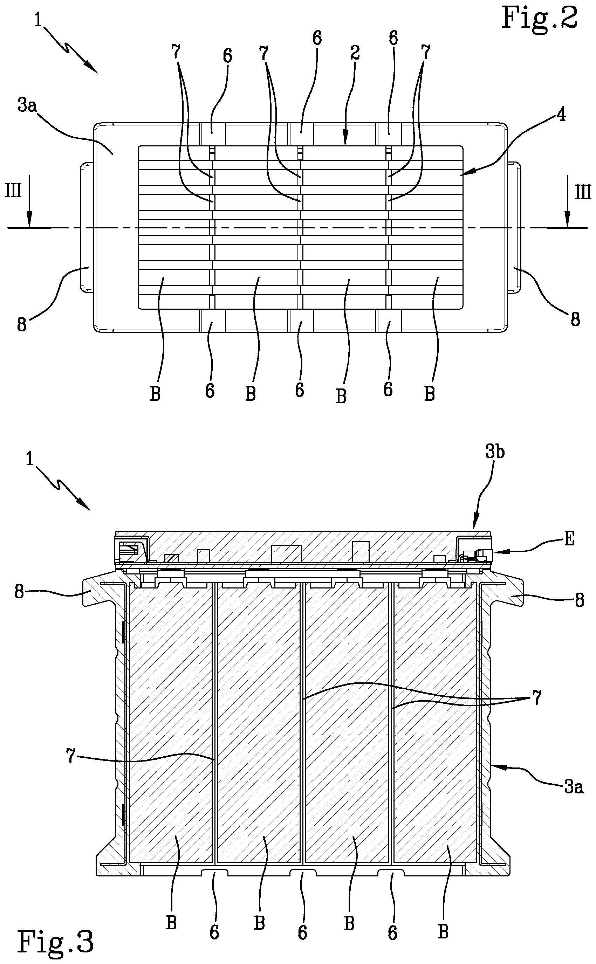

- Figure 2 is a view from below of the accumulator of Figure 1;
- Figure 3 shows the accumulator of Figure 1 in a cross section through the line III-III of Figure 2;

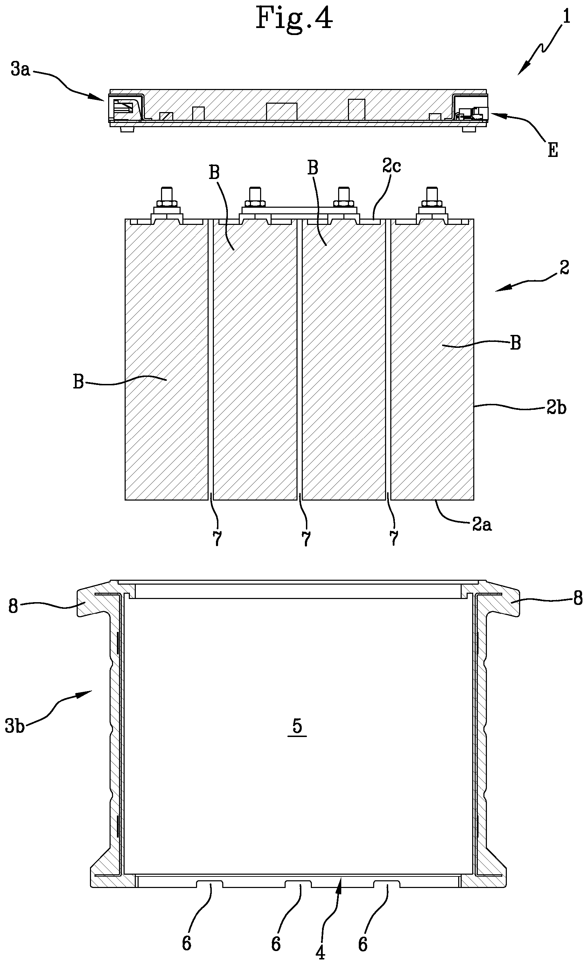

- Figure 4 is an exploded view of Figure 3;

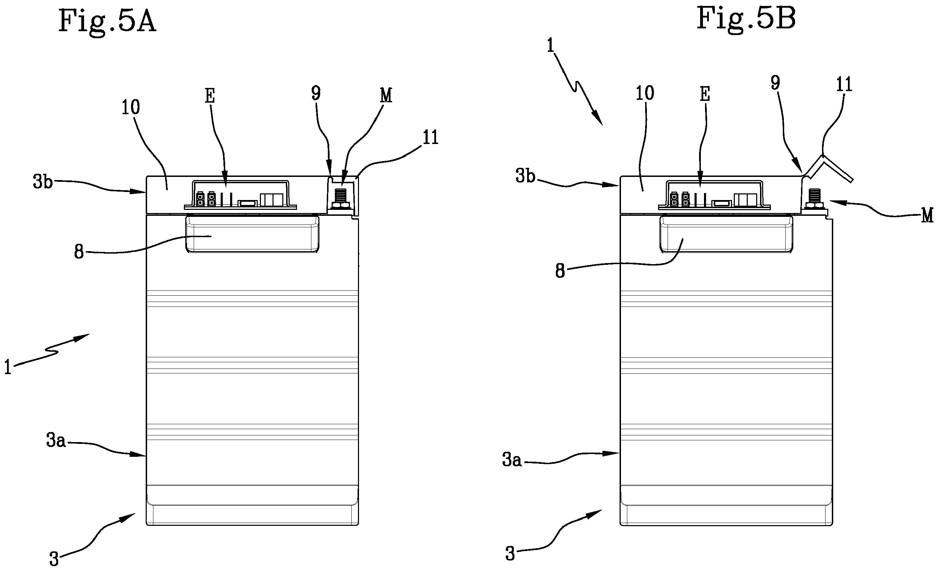

- Figures 5A and 5B show a side view of the accumulator of Figure 1 in two different configurations of use;

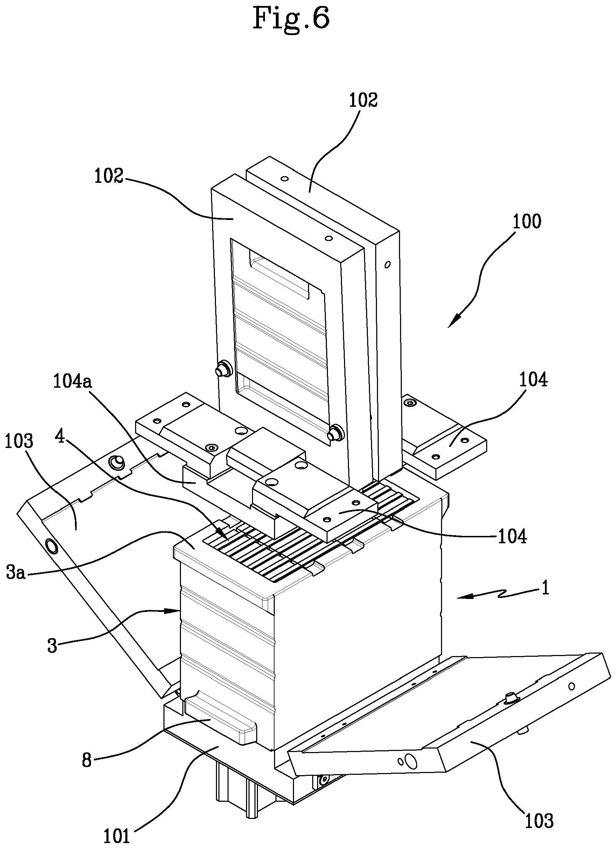

- Figure 6 shows a mould for making a part of the accumulator of Figure 1; With reference to the accompanying drawings, the numeral 1 denotes in its entirety an electrical accumulator according to this invention.

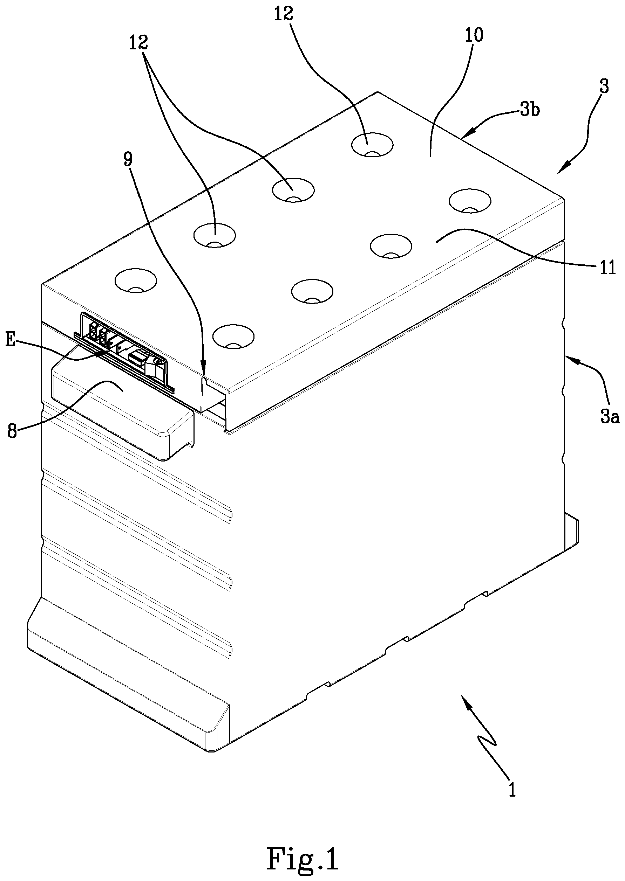

The accumulator 1, as shown in the exploded view of Figure 1, basically comprises a box-shaped body 2, forming the unit for storing electricity (for example, a lead-acid type unit) and an outer cover 3 applied outside the box-shaped body 2.

The box-shaped body 2 can be of the conventional type, more specifically having a box-shaped structure made from rigid plastic equipped with a suitable electronic control (comprising one or more electronic cards and relative connections, partly visible in Figure 1 and identified with "E") and suitable electrodes and electrical connections for the connection, respectively, to a network to be powered and a control circuit.

However the box-shaped body 2 comprises a plurality of batteries "B" (in the specific case, four batteries) positioned side by side to form a battery pack. Preferably, the batteries "B" have the same height and are placed side by side with each other.

The battery pack 2 (or, more generally, the box-shaped body 2) has overall a substantially prismatic shape having a rectangular base and a lower supporting surface 2a, a lateral surface 2b (comprising four flat panels) and an upper surface 2c.

Preferably, the cover 3 covers entirely at least the lateral surface 2b and the upper surface 2c of the battery pack 2.

Preferably, the cover 3 does not cover entirely the lower surface 2a of the battery pack 2 but forms a bottom opening 4 the purpose of which is described in detail below.

Preferably, the bottom opening 4 has a surface extension corresponding to a main part of the of the lower surface 2a of the battery pack 2.

Preferably, as shown in Figure 1, the cover 3 comprises a lower shell 3a which covers entirely at least the outer corners of the lower surface 2a and of the lateral surface 2b of the battery pack 2, leaving at least partially free (preferably entirely) the upper surface 2c of the battery pack 2, and an upper cover 3b for closing the lower shell 3a.

In other words, the lower shell 3a forms a container designed to contain the battery pack 2 and inside forms a compartment 5 (open below with the above-mentioned bottom opening 4) preferably having a height such as to contain entirely the battery pack 2.

The lower shell 3a covers entirely at least the outer corners of the lower surface 2a and of the lateral surface 2b of the box-shaped body 2, leaving at least partially free the upper surface 2c of the box-shaped body 2.

In more detail, the cover 3 covers entirely the lateral surface 2b of the battery pack 2 (but not the lower surface 2a as mentioned above). Advantageously, the lower shell 3a also has a pair of lateral handles 8 for a stable gripping by a user.

Preferably, the lower shell 3a has on the outside, on the relative bottom surface, one of more grooves 6 (three grooves in the embodiment shown) extending between the bottom opening 4 and a lateral surface of the battery pack 2.

The grooves 6 form respective channels for the passage of air putting in communication the bottom opening 4 with the outside environment when the accumulator 1 is located on a supporting surface.

Also, preferably, the batteries "B" are shaped in such a way as to form, between them, a plurality of conduits 7 extending between the lower surface 2A and the upper surface 2c of the battery pack 2 for allowing a vertical flow of cooling air.

Preferably, between two adjacent batteries "B" there is a plurality of the conduits 7, which are parallel with each other.

The conduits 7 are therefore in fluid communication with the bottom opening 4 and, consequently, with the grooves 6.

With reference to the cover 3b, it is formed by a panel positioned for closing the lower shell 3a. The cover 3b therefore has a shape substantially corresponding with the transversal cross section of the lower shell 3a.

Preferably, the cover 3b has a door 11 hinged along a hinge line and positioned for closing the terminal strip "M" of the accumulator.

The terminal strip "M" comprises a pair of terminals (only partially illustrated in the drawings) connected, in a way that is not illustrated, to the poles of the batteries "B".

Advantageously, the cover 3 is made from an elastically deformable material, preferably rubber.

More preferably, the rubber is selected from the group comprising a polyurethane mix, more preferably a polyurethane mix of isocyanate and polyol.

Preferably, in an undeformed configuration the cover 3 is shaped to match and adheres to at least a part of the outer profile of the battery pack 2 (in particular, as described above, at least to the entire lateral surface 2b of the battery pack 2 and to the lateral corners of the lower surface 2a of the battery pack).

Preferably, the lower shell 3a comprises a single block made from rubber. Preferably, the box-shaped body 2 (which encloses the battery pack) has two brackets fixed to relative lateral surfaces; the brackets have a portion which protrudes outwardly, to form a core for supporting the lateral handles 8 of the lower shell 3a.

That is, the lateral handles 8 of the lower shell 3a surround (and encapsulate) the brackets protruding laterally.

Preferably, the cover 3b also comprises a single block made from rubber.

In this configuration, the cover 3b has at least one stretch 9 with a linear extension having reduced thickness, preferably between 5 and 30 mm, forming the above-mentioned hinge line. The stretch 9 with reduced thickness is positioned between two portions mutually adjacent to the cover 3b, in particular a fixed portion 10 and the door 11 for defining the hinging of the door 11 and the rotation of the door between the open and closed limit positions.

Thus, preferably, the cover has two valves (fixed portion 10 and door 11); the valves are made from a single mould, that is, in a single cast and are joined by a thinned portion (the stretch 9).

Advantageously, this allows the electronic card E to be inserted (inserting it in an opening formed by moving the door 11).

After inserting the electronic card, the two valves of the cover 3b are closed ("sandwiched") and glued (or, in any case, fixed) to each other.

In addition to the door 11 (which is finally fixed to the rest of the cover 3b and the shell 3a), the shell 3 forms a window, having the purpose of uncovering electrical contacts for the battery or for the electronics (the window is preferably made on one of the two valves of the cover 3b).

The cover 3b also has one or more (pairs of) openings 12 (in the embodiment shown there are four pairs of openings 12, each associated with a respective battery "B").

It should be noted that the purpose of the openings 12 is to fix the cover 3b to the lower shell 3a using screws and/or to fix the cover 3b to other elements or units outside the shell 3a and rested on the cover 3b.

In light of this, preferably, the openings 12 are through openings and form at the base a narrowing, so as to define an abutment on which the heads of the screws screwed to fasten the cover 3b to the shell 3a are operatively abutted.

Advantageously, the cover 3 can be obtained by a process of injecting liquid rubber into a mould.

Preferably, the lower shell 3a and the cover 3b are made in two distinct steps using two different moulds.

Moreover, the lower shell 3a is preferably made by injecting directly on the box-shaped body 2, or battery pack.

The handles 8 are also made as a single piece together with the rest of the lower shell 3a, and they are also therefore made of rubber.

The control electronics are also embedded in the rubber, and in particular in the cover 3b (by the injection process).

More specifically, the process for making the accumulator 1 comprises the following steps:
- preparing a box-shaped body (or battery pack) 2 forming a unit for storing electricity;
- preparing a mould;
- inserting the box-shaped body 2 in the mould;
- injecting rubber in the liquid state in the mould and in contact with the box-shaped body 2 in such a way that the rubber coats at least partly the box-shaped body 2 and the characterising technical features of claim 8.

In accordance with the above description of the accumulator 1, the injection occurs until fully covering the lateral surface 2b of the box-shaped body 2 and the lateral corners of the lower surface 2a of the box-shaped body 2. The bottom opening 4 can be advantageously achieved by a suitable projection of the mould, or an external support, which supports the box-shaped body 2 during the injection.

The drawings show a mould 100 for making the lower shell 3a of the cover 3.

The mould 100 comprises a base plate 101, designed to face the upper surface 2c of the box-shaped body 2, as well as a first pair of lateral plates 102 which are opposite to each other and a second pair of lateral plates 103 which are also opposite to each other.

One of the two pairs of lateral plates 102 forms the above-mentioned handles 8.

Preferably, the pair of lateral plates 102 forming the handles 8 is uncoupled from the base plate 101 and can be stably connected to it using threaded elements.

However, preferably, the lateral plates of the other pair 103 are coupled to the base plate 101, for example by hinging about respective axes.

In order to make a partial covering of the lower surface 2a of the box-shaped body 2 and form the above-mentioned bottom opening 4, the mould 100 also comprises one or more auxiliary plates 104 having respective protrusions 104a designed to enter into contact with the lower surface 2a of the box-shaped body 2. In other words, the protrusions 104a have an overall size corresponding to the above-mentioned bottom opening 4 in such a way that, after injection, the removal of the auxiliary plates 104 makes the bottom opening 4.

This invention achieves the preset aims.

The making of the outer cover entirely in rubber constitutes an effective protection against vibrations and/or impacts, thus increasing the working life of the accumulator.

Moreover, the integral and single-block cover, using rubber, of the lateral surfaces of the box-shaped body allows an efficient screen to be made against adverse weather conditions and/or corrosive substances.

The use of the rubber also improves in a significant fashion the adherence of the accumulator on any supporting surface, making the positioning more stable and eliminating the need for specific attachment or fitting elements.

Moreover, the making of lateral handles allows a practical and safe movement of the accumulator by an operator.

The invention described above is susceptible of industrial application and may be modified and adapted in several ways without thereby departing from the scope of the claims.

## Claims

1. An electrical accumulator, comprising:
- a box-shaped body (2) forming a unit for storing electricity and having has a lower supporting surface (2a), a lateral surface (2b) and an upper surface (2c);
- an outer cover (3) made of rubber and stably applied to the box-shaped body (2) for surrounding it,
wherein the outer cover (3) forms a rubber matrix encapsulating at least a portion of the box-shaped body (2), wherein the outer cover (3) is moulded directly around the box-shaped body (2), whereby the box-shaped body (2) is embedded in said rubber matrix, wherein the box-shaped body (2) is formed by a plurality of batteries (B) placed side by side to form a battery pack (2), and wherein the cover (3) covers entirely at least the outer corners of the battery pack (2),
**characterized in that** the outer cover (3) comprises:
- a lower shell (3a) which covers entirely at least the outer corners of the lower surface (2a) and of the lateral surface (2b) of the box-shaped body (2), leaving at least partially free the upper surface (2c) of the box-shaped body (2), and
- an upper cover (3b) for closing which can be stably coupled to the lower shell (3a),
wherein the upper cover (3b) comprises a single block made from rubber and has at least a stretch (9) with a linear extension with reduced thickness, positioned between two mutually adjacent portions (10, 11) of the outer cover (3b); the stretch (9) with reduced thickness forming a planned line of weakness designed to constitute a line for hinging the second portion (11) of the cover to the first portion (10) of the cover.

2. The accumulator according to claim 1, wherein the cover (3) is shaped to match and adhere to at least a part of the outer profile of the box-shaped body (2).

3. The accumulator according to claim 1 or 2, wherein the lower shell (3a) comprises a monolithic piece made from rubber and/or the upper cover (3b) comprises a monolithic piece made from rubber.

4. The accumulator according to any one of the preceding claims, wherein the rubber comprises a polyurethane mix of isocyanate and polyol.

5. The accumulator according to any one of the preceding claims, wherein the box-shaped body (2) is formed by a plurality of batteries (B) placed side by side to form a battery pack (2), and wherein the cover (3) covers entirely at least the outer corners of the battery pack (2).

6. The accumulator according to claim 5, wherein the batteries (B) are shaped in such a way as to form, between them, a plurality of conduits (7) extending between the lower surface (2a) and the upper surface (2c) of the battery pack (2) for the passage of cooling air.

7. The accumulator according to claim 6, wherein the cover (3) comprises:
- a lower shell (3a) which covers entirely at least the outer corners of the lower surface (2a) and of the lateral surface (2b) of the box-shaped body (2), leaving at least partially free the upper surface (2c) of the box-shaped body (2), and
- an upper cover (3b) for closing which can be stably coupled to the lower shell (3a),
and wherein the lower shell (3a) has a bottom wall having a bottom opening (4) passing through the bottom wall and facing the conduits (7), the bottom wall also having at least one groove (6) extending between the bottom opening (4) and a lateral surface of the lower shell (3a).

8. A process for making an accumulator according to any one of the preceding claims, comprising the following steps:
- preparing a box-shaped body (2) forming a unit for storing electricity;
- preparing a mould (100);
- inserting the box-shaped body (2) in the mould (100);
- injecting rubber in the liquid state in the mould (100) and in contact with the box-shaped body (2) in such a way that the rubber coats at least partly the box-shaped body (2) to form an outer cover (3) moulded directly around the box-shaped body (2),
**characterized by** comprising a step of making an upper cover (3b) for covering the upper surface (2c) of the box-shaped body (2), the step of making the cover (3b) being performed by preparing an auxiliary mould different to the mould (100) used in the previous injecting step, and then injecting rubber in the liquid state in the auxiliary mould, for providing the upper cover (3b) comprises a single block made from rubber and has at least a stretch (9) with a linear extension with reduced thickness, positioned between two mutually adjacent portions (10, 11) of the outer cover (3b); the stretch (9) with reduced thickness forming a planned line of weakness designed to constitute a line for hinging the second portion (11) of the cover to the first portion (10) of the cover.

9. The process according to claim 8, wherein the step of injecting the rubber is performed in such a way that the rubber coats at least a part of the bottom surface (2a) and an entire lateral surface (2b) of the box-shaped body (2), leaving at least partly free an upper surface (2c) of the box-shaped body (2).

## Patentansprüche

1. Elektrischer Akkumulator, umfassend:
- einen kastenförmigen Körper (2), bildend eine Einheit zum Speichern von Elektrizität und aufweisend eine untere Halteoberfläche (2a), eine seitliche Oberfläche (2b) und eine obere Oberfläche (2c);
- eine außenseitige Abdeckung (3), bestehend aus Kautschuk und stabil angebracht am kastenförmigen Körper (2), um diesen zu umgeben,
wobei die außenseitige Abdeckung (3) eine Kautschukmatrix bildet, die mindestens einen Abschnitt des kastenförmigen Körpers (2) einkapselt, wobei die außenseitige Abdeckung (3) direkt rund um den kastenförmigen Körper (2) geformt ist, wobei der kastenförmige Körper (2) in die Kautschukmatrix eingebettet ist, wobei der kastenförmige Körper (2) durch eine Vielzahl an Batterien (B) gebildet ist, die aneinandergereiht platziert sind, um ein Batteriepaket (2) zu bilden, und wobei die Abdeckung (3) in vollem Umfang mindestens die außenseitigen Ecken des Batteriepakets (2) bedeckt, **dadurch gekennzeichnet, dass** die außenseitige Abdeckung (3) umfasst:
- eine untere Schale (3a), die in vollem Umfang mindestens die außenseitigen Ecken der unteren Oberfläche (2a) und der seitlichen Oberfläche (2b) des kastenförmigen Körpers (2) bedeckt, wobei die obere Oberfläche (2c) des kastenförmigen Körpers (2) mindestens teilweise frei gelassen wird, und
- eine obere Abdeckung (3b) zum Verschließen, die stabil mit der unteren Schale (3a) gekuppelt werden kann,
wobei die obere Abdeckung (3b) einen einzelnen Block umfasst, der aus Kautschuk besteht und mindestens ein Teilstück (9) mit einer linearen Ausdehnung mit reduzierter Dicke aufweist, positioniert zwischen zwei aneinander angrenzenden Abschnitten (10, 11) der außenseitigen Abdeckung (3b), wobei das Teilstück (9) mit reduzierter Dicke eine geplante Schwächungslinie bildet, die ausgestaltet ist, um eine Linie zum gelenkigen Anbringen des zweiten Abschnitts (11) der Abdeckung am ersten Abschnitt (10) der Abdeckung darzustellen.

2. Akkumulator nach Anspruch 1, wobei die Abdeckung (3) passend zu mindestens einem Teil des äußeren Profils des kastenförmigen Körpers (2) und um an diesem anzuhaften ausgebildet ist.

3. Akkumulator nach Anspruch 1 oder 2, wobei die untere Schale (3a) ein monolithisches Stück aus Kautschuk umfasst, und/oder die obere Abdeckung (3b) ein monolithisches Stück aus Kautschuk umfasst.

4. Akkumulator nach einem der vorhergehenden Ansprüche, wobei der Kautschuk eine Polyurethanmischung aus Isocyanat und Polyol umfasst.

5. Akkumulator nach einem der vorhergehenden Ansprüche, wobei der kastenförmige Körper (2) durch eine Vielzahl an Batterien (B) gebildet ist, die aneinandergereiht platziert sind, um ein Batteriepaket (2) zu bilden, und wobei die Abdeckung (3) in vollem Umfang mindestens die außenseitigen Ecken des Batteriepakets (2) bedeckt.

6. Akkumulator nach Anspruch 5, wobei die Batterien (B) ausgeformt sind, um zwischen ihnen eine Vielzahl an Leitungen (7) zu bilden, die sich zwischen der unteren Oberfläche (2a) und der oberen Oberfläche (2c) des Batteriepakets (2) für das Durchströmen von Kühlluft zu erstrecken.

7. Akkumulator nach Anspruch 6, wobei die Abdeckung (3) umfasst:
- eine untere Schale (3a), die in vollem Umfang mindestens die außenseitigen Ecken der unteren Oberfläche (2a) und der seitlichen Oberfläche (2b) des kastenförmigen Körpers (2) bedeckt, wobei die obere Oberfläche (2c) des kastenförmigen Körpers (2) mindestens teilweise frei gelassen wird, und
- eine obere Abdeckung (3b) zum Verschließen, die stabil mit der unteren Schale (3a) gekuppelt werden kann,
und wobei die untere Schale (3a) eine Bodenwand aufweist, die eine Bodenöffnung (4) aufweist, die durch die Bodenwand führt und den Leitungen (7) zugewandt ist, wobei die Bodenwand auch mindestens eine Nut (6) aufweist, die sich zwischen der Bodenöffnung (4) und einer seitlichen Oberfläche der unteren Schale (3a) erstreckt.

8. Verfahren zur Herstellung eines Akkumulators nach einem der vorhergehenden Ansprüche, umfassend die folgenden Schritte:
- Vorbereiten eines kastenförmigen Körpers (2), bildend eine Einheit zum Speichern von Elektrizität;
- Vorbereiten einer Form (100);
- Einfügen des kastenförmigen Körpers (2) in die Form (100) ;
- Einspritzen von Kautschuk im flüssigen Zustand in die Form (100) und in Kontakt mit dem kastenförmigen Körper (2), sodass der Kautschuk mindestens teilweise den kastenförmigen Körper (2) beschichtet, um eine außenseitige Abdeckung (3) zu bilden, die direkt rund um den kastenförmigen Körper (2) geformt ist,
**dadurch gekennzeichnet, dass** es einen Schritt zum Herstellen einer oberen Abdeckung (3b) umfasst, um die obere Oberfläche (2c) des kastenförmigen Körpers (2) zu bedecken, wobei der Schritt zum Herstellen der Abdeckung (3b) durchgeführt wird, indem eine Hilfsform vorbereitet wird, die sich von der Form (100) unterscheidet, die beim vorherigen Schritt zum Einspritzen genutzt wurde, und indem anschließend Kautschuk im flüssigen Zustand in die Hilfsform eingespritzt wird, um die obere Abdeckung (3b) bereitzustellen, die einen einzelnen Block umfasst, der aus Kautschuk besteht und mindestens ein Teilstück (9) mit einer linearen Ausdehnung mit reduzierter Dicke aufweist, positioniert zwischen zwei aneinander angrenzenden Abschnitten (10, 11) der außenseitigen Abdeckung (3b), wobei das Teilstück (9) mit reduzierter Dicke eine geplante Schwächungslinie bildet, die ausgestaltet ist, um eine Linie zum gelenkigen Anbringen des zweiten Abschnitts (11) der Abdeckung am ersten Abschnitt (10) der Abdeckung darzustellen.

9. Verfahren nach Anspruch 8, wobei der Schritt zum Einspritzen des Kautschuks so durchgeführt wird, dass der Kautschuk mindestens einen Teil der Bodenoberfläche (2a) und eine vollständige seitliche Oberfläche (2b) des kastenförmigen Körpers (2) bedeckt, wobei eine obere Oberfläche (2c) des kastenförmigen Körpers (2) mindestens teilweise frei gelassen wird.

## Revendications

1. Accumulateur électrique, comprenant :
- un corps en forme de boîte (2) formant une unité destinée à stocker l'électricité et comportant une surface de support inférieure (2a), une surface latérale (2b) et une surface supérieure (2c) ;
- un couvercle extérieur (3) en caoutchouc et appliqué stablement au corps en forme de boîte (2) pour l'entourer,
dans lequel le couvercle extérieur (3) forme une matrice de caoutchouc encapsulant au moins une partie du corps en forme de boîte (2), dans lequel le couvercle extérieur (3) est directement moulé autour du corps en forme de boîte (2), par lequel le corps en forme de boîte (2) est intégré dans ladite matrice de caoutchouc, dans lequel le corps en forme de boîte (2) est formé d'une pluralité de batteries (B) placées côte à côte pour former un bloc-batterie (2), et dans lequel le revêtement (3) recouvre entièrement au moins les coins extérieurs du bloc-batterie (2), **caractérisé en ce que** le couvercle extérieur (3) comprend :
- une coque inférieure (3a) qui recouvre entièrement au moins les coins extérieurs de la surface inférieure (2a) et de la surface latérale (2b) du corps en forme de boîte (2), en laissant au moins en partie libre la surface supérieure (2c) du corps en forme de boîte (2), et
- un couvercle supérieur (3b) de fermeture pouvant être stablement couplé à la coque inférieure (3a),
dans lequel le couvercle supérieur (3b) comprend un bloc individuel en caoutchouc et comporte au moins une portion (9), dotée d'une extension linéaire avec une épaisseur réduite, positionnée entre deux parties (10, 11) mutuellement adjacentes du couvercle extérieur (3b) ; la portion (9) dotée d'une épaisseur réduite formant une ligne programmée de faiblesse conçue pour constituer une ligne pour articuler la seconde partie (11) du couvercle à la première partie (10) du couvercle.

2. Accumulateur selon la revendication 1, dans lequel le couvercle (3) a une forme destinée à correspondre et à adhérer à au moins une partie du profil extérieur du corps en forme de boîte (2).

3. Accumulateur selon les revendications 1 ou 2, dans lequel la coque inférieure (3a) comprend un élément monolithique en caoutchouc et/ou le couvercle supérieur (3b) comprend un élément monolithique en caoutchouc.

4. Accumulateur selon l'une quelconque des revendications précédentes, dans lequel le caoutchouc comprend un mélange de polyuréthane d'isocyanate et de polyol.

5. Accumulateur selon l'une quelconque des revendications précédentes, dans lequel le corps en forme de boîte (2) est formé d'un pluralité de batteries (B) placées côte à côte pour former un bloc-batterie (2), et dans lequel le couvercle (3) recouvre entièrement au moins les coins extérieurs du bloc-batterie (2).

6. Accumulateur selon la revendication 5, dans lequel les batteries (B) ont une forme prévue pour former, entre elles, une pluralité de conduits (7) se prolongeant entre la surface inférieure (2a) et la surface supérieure (2c) du bloc-batterie (2) pour le passage d'air de refroidissement.

7. Accumulateur selon la revendication 6, dans lequel le couvercle (3) comprend :
- une coque inférieure (3a) qui recouvre entièrement au moins les coins extérieurs de la surface inférieure (2a) et de la surface latérale (2b) du corps en forme de boîte (2), en laissant au moins en partie libre la surface supérieure (2c) du corps en forme de boîte (2), et
- un couvercle supérieur (3b) de fermeture pouvant être stablement couplé à la coque inférieure (3a),
et dans lequel la coque inférieure (3a) comporte une paroi de fond comportant une ouverture de fond (4) passant à travers la paroi de fond et faisant face aux conduits (7), la paroi de fond comportant aussi au moins une rainure (6) se prolongeant entre l'ouverture de fond (4) et une surface latérale de la coque inférieure (3a).

8. Procédé de fabrication d'un accumulateur selon l'une quelconque des revendications précédentes, comprenant les étapes suivantes :
- préparer un corps en forme de boîte (2) formant une unité de stockage d'électricité ;
- préparer un moule (100) ;
- introduire le corps en forme de boîte (2) dans le moule (100) ;
- injecter du caoutchouc à l'état liquide dans le moule (100) et en contact avec le corps en forme de boîte (2) de manière à ce que le caoutchouc revête au moins partiellement le corps en forme de boîte (2) pour former un couvercle extérieur (3) moulé directement autour du corps en forme de boîte (2),
**caractérisé en ce qu'**il comprend une étape consistant à réaliser un couvercle supérieur (3b) pour recouvrir la surface supérieure (2c) du corps en forme de boîte (2), l'étape consistant à réaliser le couvercle (3b) étant réalisée en préparant un moule auxiliaire différent du moule (100) utilisé dans l'étape précédente d'injection, et consistant ensuite à injecter du caoutchouc à l'état liquide dans le moule auxiliaire pour fournir le couvercle supérieur (3b) qui comprend un bloc individuel en caoutchouc et comporte au moins une portion (9), dotée d'une extension linéaire avec une épaisseur réduite, positionnée entre deux parties (10, 11) mutuellement adjacentes du couvercle extérieur (3b) ; la portion (9) dotée d'une épaisseur réduite formant une ligne programmée de faiblesse conçue pour constituer une ligne pour articuler la seconde partie (11) du couvercle à la première partie (10) du couvercle.

9. Procédé selon la revendication 8, dans lequel l'étape consistant à injecter du caoutchouc est réalisée de manière à ce que le caoutchouc revête au moins une partie de la surface de fond (2a) et une surface latérale (2b) entière du corps en forme de boîte (2), en laissant au moins en partie libre une surface supérieure (2c) du corps en forme de boîte (2).
